(19) Europäisches Patentamt
European Patent Office
Office européen des brevets

(11) **EP 4 730 791 A1**

(12) **EUROPEAN PATENT APPLICATION**

(43) Date of publication:
**22.04.2026 Bulletin 2026/17**

(21) Application number: **24306716.2**

(22) Date of filing: **17.10.2024**

(51) International Patent Classification (IPC):
**H04N 19/12** (2014.01)    **H04N 19/61** (2014.01)
**H04N 19/70** (2014.01)    **H04N 19/147** (2014.01)
**H04N 19/176** (2014.01)

(52) Cooperative Patent Classification (CPC):
**H04N 19/12; H04N 19/147; H04N 19/176;
H04N 19/61; H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE LEANNEC, Fabrice
  35830 BETTON (FR)**
• **NASER, Karam
  35250 MOUAZE (FR)**
• **BONNINEAU, Charles
  MONTREAL, H2J 1G1 (CA)**
• **PURI, Saurabh
  SAINT-LAZARE, J7T 0P6 (CA)**

(74) Representative: **Vossius & Partner
Patentanwälte Rechtsanwälte mbB
Siebertstraße 3
81675 München (DE)**

(54) **COMPETITION BETWEEN LFNST AND NSPT**

(57)    In one implementation, a video decoder determines that a first transform method and a second transform method are both allowed for a current block, wherein the first transform method uses a primary separable transform followed by a non-separable secondary transform, and wherein the second transform method uses a single non-separable transform; selects a transform method from the first transform method and the second transform method for the current block; and decodes the current block based on the selected transform method for the block. On the encoder side, the encoder encodes the current block by the first transform method and the second transform method; selects a transform method from the first transform method and the second transform method for the current block based on the encoding results by the first and second transform methods; and encodes the current block based on the selected transform method for the block.

FIG. 22

EP 4 730 791 A1

**Description**

**BACKGROUND**

The present application is related to a method and an apparatus for transform selection in video encoding and decoding.

**BRIEF SUMMARY**

Briefly stated, in one embodiment, a method of video decoding is presented, comprising: determining that a first transform method and a second transform method are both allowed for a current block, wherein the first transform method uses a primary separable transform followed by a non-separable secondary transform, and wherein the second transform method uses a single non-separable transform; selecting a transform method from the first transform method and the second transform method for the current block; and decoding the current block based on the selected transform method for the block.

In another embodiment, an apparatus for video decoding is presented, comprising one or more processors and at least one memory coupled to the one or more processors, wherein the one or more processors are configured to: determine that a first transform method and a second transform method are both allowed for a current block, wherein the first transform method uses a primary separable transform followed by a non-separable secondary transform, and wherein the second transform method uses a single non-separable transform; select a transform method from the first transform method and the second transform method for the current block; and decode the current block based on the selected transform method for the block.

In another embodiment, a method of video encoding is presented, comprising: encoding a current block by a first transform method, wherein the first transform method uses a primary separable transform followed by a non-separable secondary transform; encoding the current block by a second transform method, wherein the second transform method uses a single non-separable transform; selecting a transform method from the first transform method and the second transform method for the current block based on the encoding the current block by the first and second transform methods; and encoding the current block based on the selected transform method for the block.

In another embodiment, an apparatus for video encoding is presented, comprising one or more processors and at least one memory coupled to the one or more processors, wherein the one or more processors are configured to: encode a current block by a first transform method, wherein the first transform method uses a primary separable transform followed by a non-separable secondary transform; encode the current block by a second transform method, wherein the second transform method uses a single non-separable transform; select a transform method from the first transform method and the second transform method for the current block based on the encoding the current block by the first and second transform methods; and encode the current block based on the selected transform method for the block.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates neighboring blocks (L, A, BL, AR, AL) used in the derivation of a general MPM list;
FIG. 5 illustrates HoG computation in DIMD mode, from a template of width 3 pixels;
FIG. 6 illustrates prediction fusion by weighted averaging of two HoG modes and planar mode;
FIG. 7 illustrates an intra template matching search area used;
FIG. 8 illustrates use of an IntraTMP block vector for IBC block;
FIG. 9 illustrates an extended MRL candidate list;
FIG. 10 illustrates the template area;

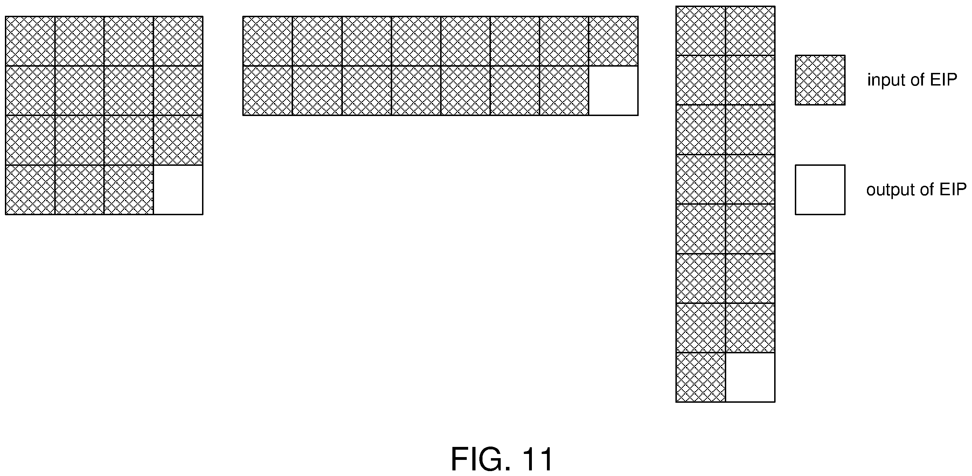

FIG. 11 illustrates the defined three filter shapes with fifteen inputs and one output;

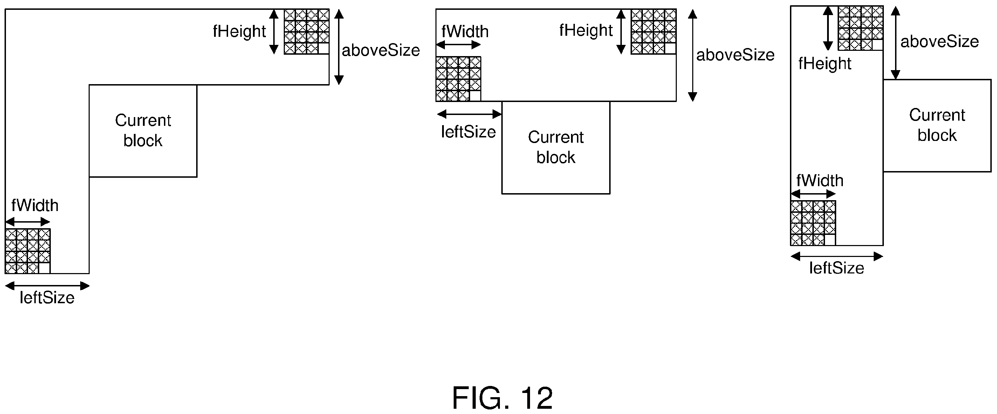

FIG. 12 illustrates the defined three types of the reconstructed area;

FIG. 13 illustrates an example of generating predictions for different positions in the current block by a diagonal order;

FIG. 14 illustrates spatial GPM candidates;

FIG. 15A illustrates an GPM template, and FIG. 15B illustrates GPM blending;

FIG. 16 illustrates mapping of intra prediction modes to LFNST set index;

FIG. 17 illustrates a Low-Frequency Non-Separable Transform (LFNST) process;

FIG. 18 illustrates the ROI for LFNST16;

FIG. 19 illustrates the ROI for LFNST8;

FIG. 20 illustrates NSPT applied to small blocks, while LFNST is applied for the rest;

FIG. 21 illustrates a LFNST/NSPT index decoding process in ECM; and

FIG. 22 illustrates a LFNST/NSPT index decoding process according one or more embodiments.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

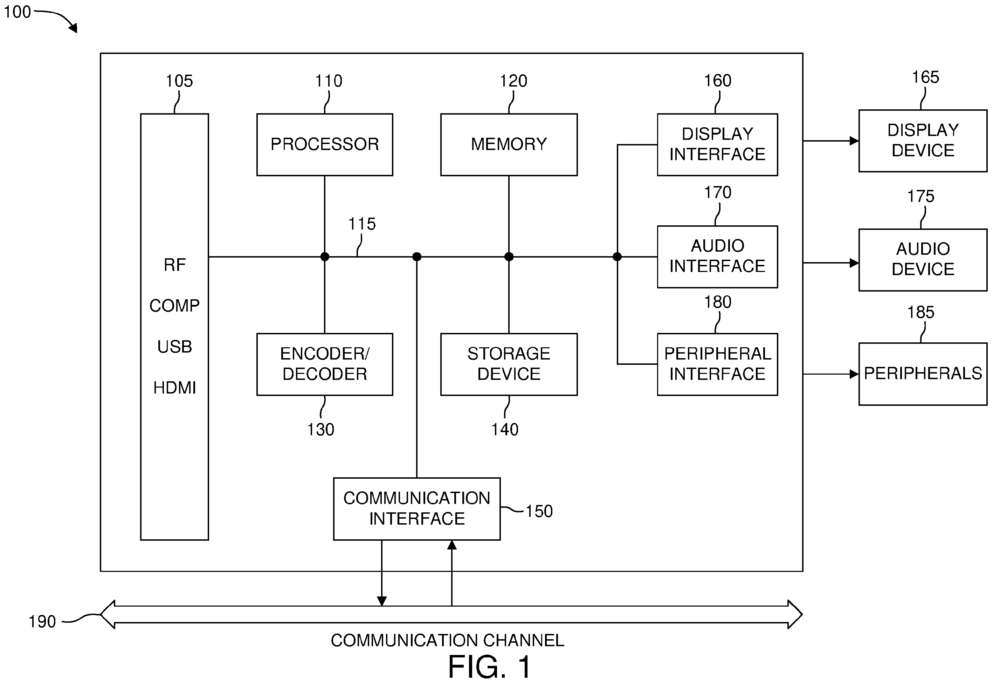

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

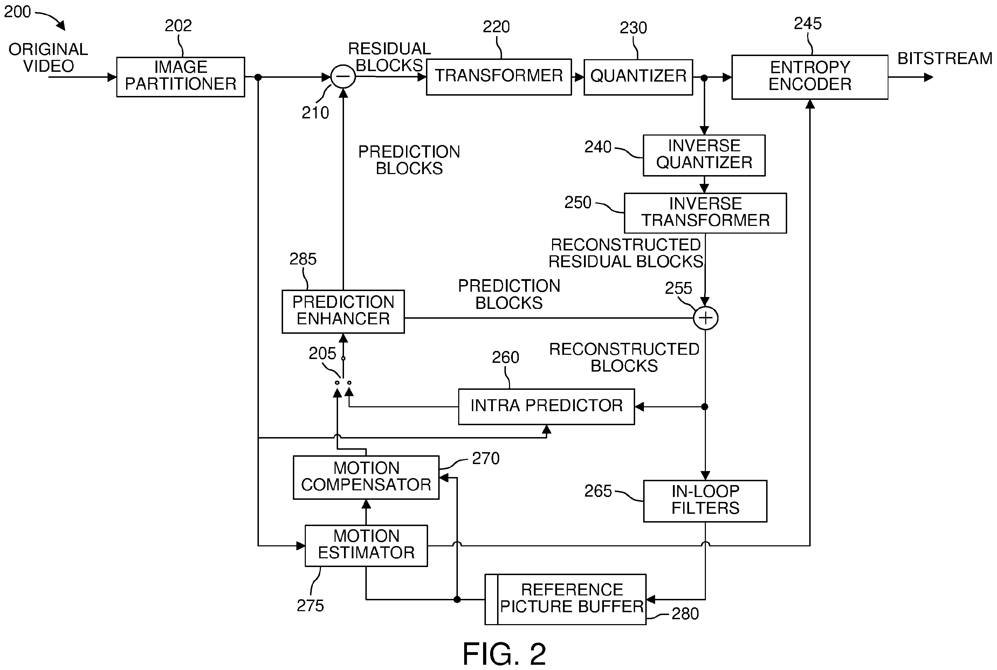

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

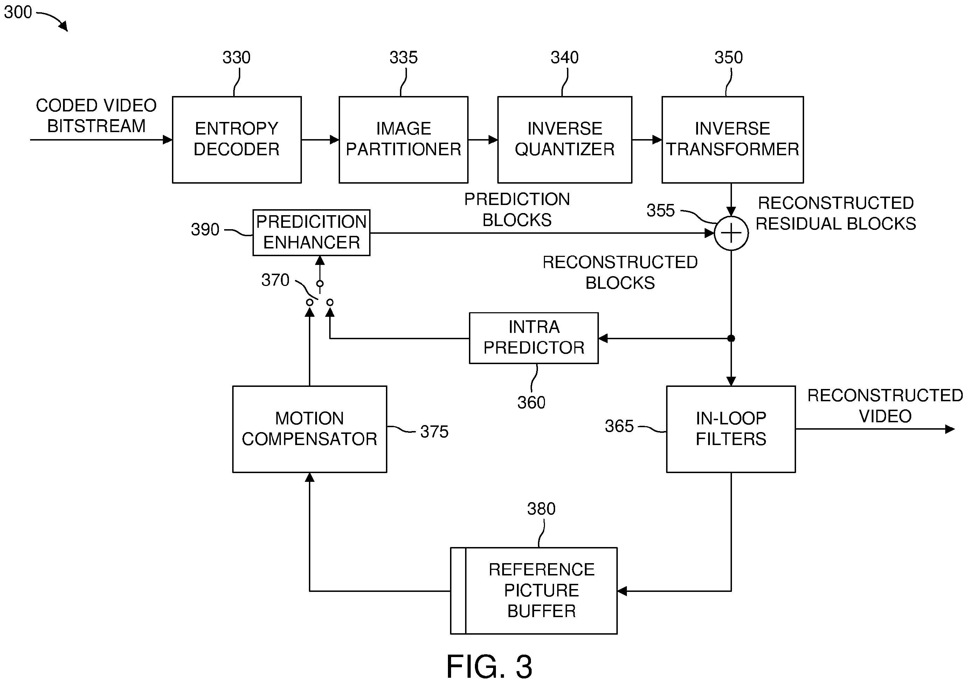

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, $U$ and $V$ (also denoted herein by C).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

**Intra coding mode in ECM**

**Primary and Secondary MPM (Most Probable Mode)**

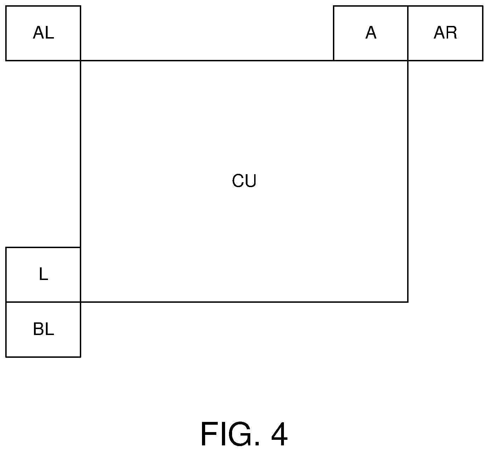

A secondary MPM lists is introduced in ECM, in addition to the Most Probable Modes list already specified in VVC standard. The existing primary MPM (PMPM) list consists of 6 entries and the secondary MPM (SMPM) list includes 16 entries. A general MPM list with 22 entries is constructed first, and then the first 6 entries in this general MPM list are included into the PMPM list, and the rest of entries form the SMPM list. The first entry in the general MPM list is the Planar mode. The remaining entries are composed of the intra modes of the left (L), above (A), below-left (BL), above-right (AR), and above-left (AL) neighboring blocks as shown in FIG. 4, and DIMD modes which are sorted in ascending order of SAD cost. Up to 5 modes with the smallest SAD cost are added. The SAD cost is computed between the prediction and the reconstruction samples of the template. The sorted directional modes with added offset are added into the general MPM list, and then the default modes, until the general MPM list with 22 entries is constructed.

If a CU block is vertically oriented, the order of neighboring blocks is A, L, BL, AR, AL; otherwise, it is L, A, BL, AR, AL.

The MPM list is equally divided into four groups and the group index is parsed first. Then, a mode index is further parsed to indicate which mode in the selected group is used.

**Decoder side intra mode derivation (DIMD)**

When DIMD is applied, up to five intra modes are derived from the reconstructed neighbor samples, based on a histogram of gradients (HoG).

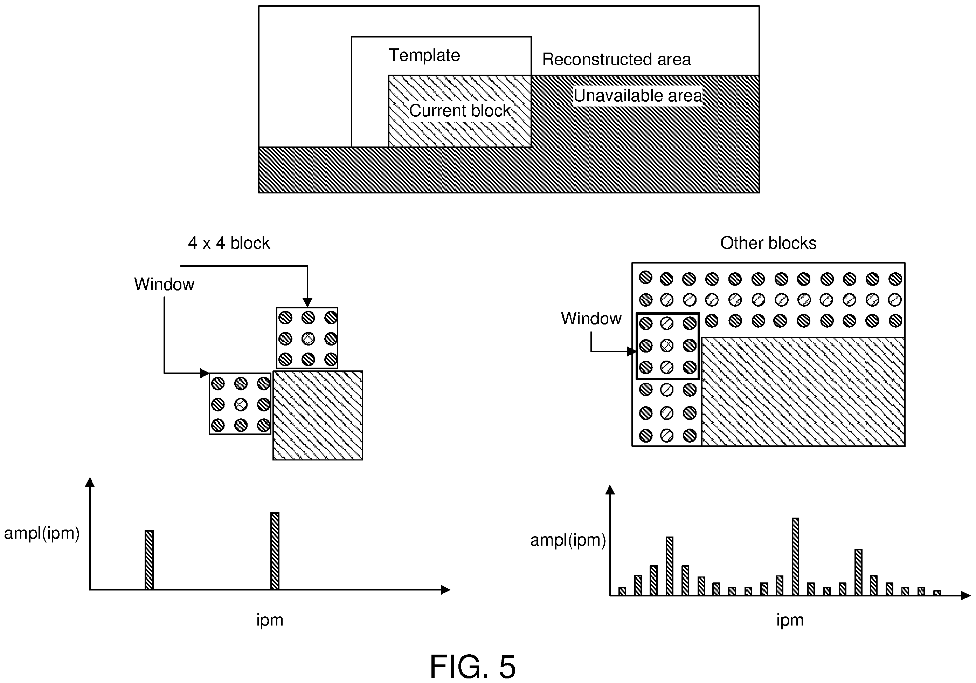

The HoG computation is carried out by applying horizontal and vertical Sobel filters on pixels in a template of width 3 around the block (see FIG. 5). Once computed, the IPMs corresponding to the two tallest histogram bars are selected for the block.

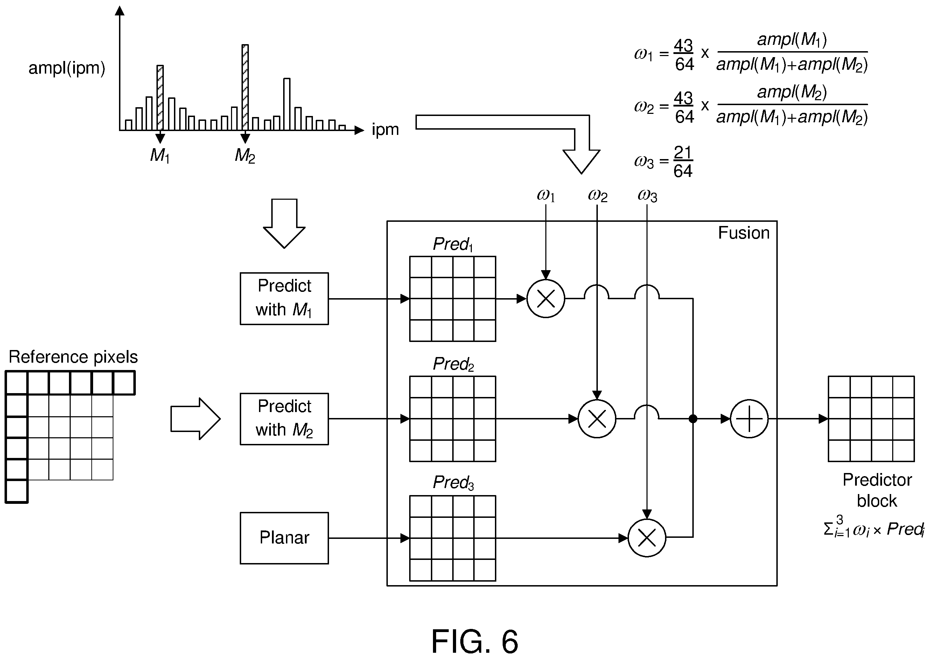

Up to five intra modes are derived from the reconstructed neighbor samples, and those five predictors are combined with the planar mode predictor with the weights derived from a histogram of gradients amplitudes, as illustrated in FIG. 6.

For a block of size $W \times H,$ the weight for each of the five derived modes is modified if the one the above or left histogram magnitude is twice larger than the other one. In this case, the weights are location dependent and computed as follows:

If the above histogram magnitude is twice larger than the left one, then:

$$w_i(x, y) = wDimd_i + \Delta_i - 2\Delta_i \frac{y}{(H-1)}.$$

If the left histogram magnitude is twice larger than the above one, then:

$$w_i(x, y) = wDimd_i + \Delta_i - 2\Delta_i \frac{x}{(W-1)},$$

where $wDimd_i$ is the unmodified uniform weight of the DIMD selected as in JVET-O0449, $\Delta_i$ is pre-defined and set to 10.

Derived intra modes are included into the primary list of intra most probable modes (MPM), so the DIMD process is performed before the MPM list is constructed. The primary derived intra mode of a DIMD block is stored with a block and is used for MPM list construction of the neighboring blocks.

**Intra template matching**

Intra template matching prediction (IntraTMP) is a special intra prediction mode that copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

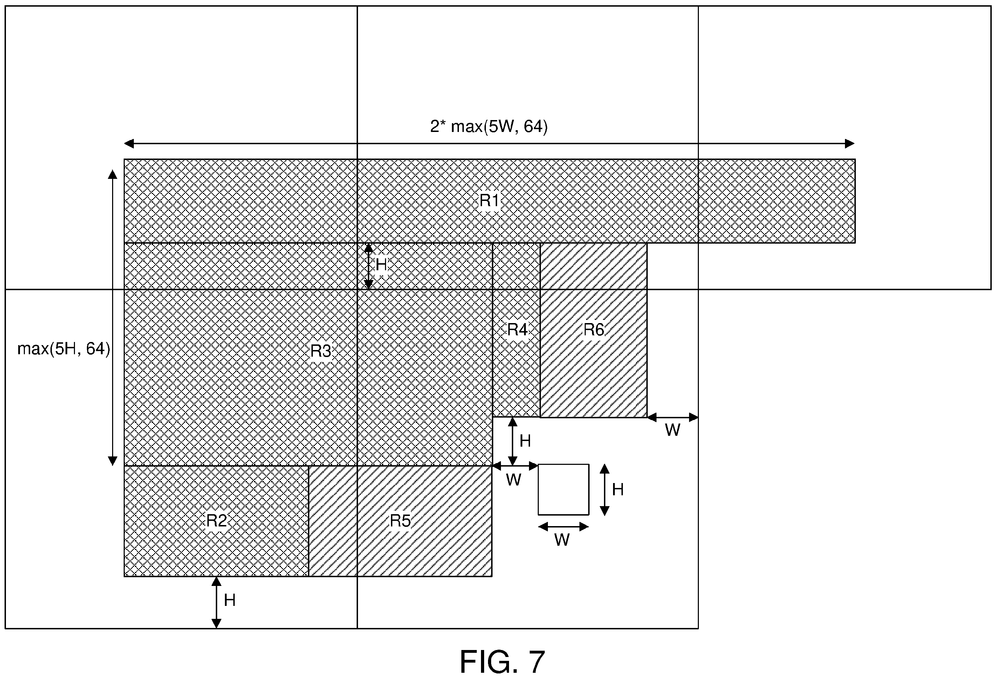

The prediction signal is generated by matching the L-shaped, Top-only or Left-only causal neighbor of the current block with another block in a predefined search area as depicted in FIG. 7. There are 6 predefined search areas, i.e., R1 to R6 in FIG. 7, which contain the reconstructed samples from the top and left CTUs as well as part of the reconstructed samples within the current CTU that are located above, left, bottom-left and top-right to the current block. Sum of absolute differences (SAD) is used as a cost function.

A given search order of the 6 regions is utilized, i.e., R4, R5, R6, R1, R2, and R3. Within each region, the decoder constructs a candidate list of up to 19 template matching block vectors that are ranked in ascending order according to the template cost (SAD). The following modes are supported:

1. Single predictor: A single predictor is selected from the candidate list.
2. Fusion of multiple predictors: multiple predictors are blended multiple to derive the final prediction block. The blending weights are either computed from the template matching cost of each predictor, or with Wiener-filter based weight derivation method.
3. Sub-pel precision: When single predictor is used, sub-pel precision can be used with 1/2-pel precision, 1/4-pel precision and 3/4-pel precision, each with 8 possible directions

4. linear filter model: A linear filter can be learned between the reference template and current template and be applied to reference block. This mode can be used for single predictor when sub-pel precision is not used.

The dimensions of all regions (SearchRange_w, SearchRange_h) are set proportional to the block dimension (BlkW, BlkH) to have a fixed number of SAD comparisons per pixel. That is:

$$SearchRange\_w = min(64, a * BlkW)$$

$$SearchRange\_h = min(64, a * BlkH)$$

where $a$ is a constant that controls the gain/complexity trade-off. In practice, $a$ is equal to 5.

To speed-up the template matching process, the search range of all search regions is subsampled by a factor of 3. After finding the best match, a refinement process is performed. The refinement is done via a second template matching search around the best match with a reduced range.

The Intra template matching tool is enabled for CUs with size less than or equal to 64 in width and height. This maximum CU size for Intra template matching is configurable.

The Intra template matching prediction mode is signaled at CU level through a dedicated flag when DIMD is not used for current CU.

**IntraTMP derived block vector candidates for IBC**

In this method block vector (BV) derived from the intra template matching prediction (IntraTMP) is used for intra block copy (IBC). The stored IntraTMP BV of the neighbouring blocks along with IBC BV are used as a spatial BV candidates in the IBC candidate list construction.

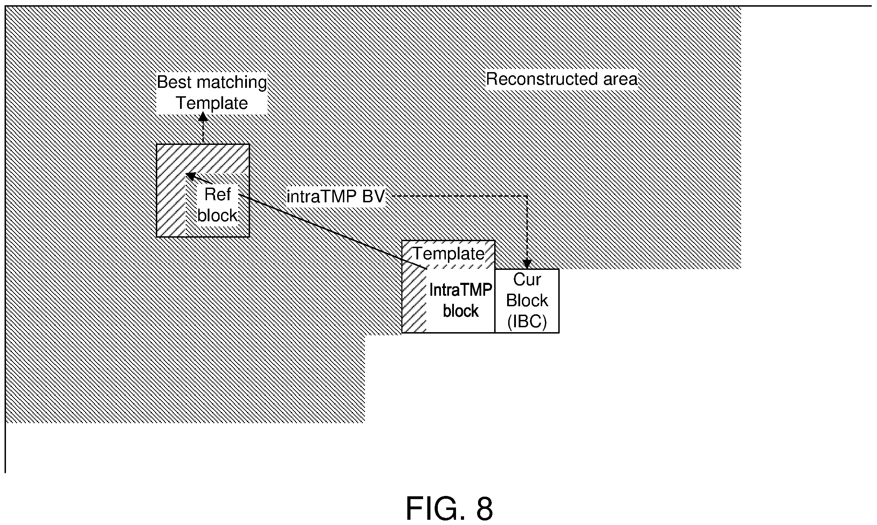

IntraTMP block vector is stored in the IBC block vector buffer and, the current IBC block can use both IBC BV and IntraTMP BV of neighbouring blocks as a BV candidate for the IBC BV candidate list as shown in FIG. 8.

IntraTMP block vectors are added to the IBC block vector candidate list as spatial candidates. IntraTMP block vectors are stored in quarter-pel resolution for coding of IBC block vectors and HMVP.

**Template-based intra mode derivation (TIMD)**

For each intra prediction mode in MPMs, as well as the wide-angle modes if the above-right and/or bottom-left reference samples are available, SATD (Sum of Absolute Transformed Differences) between the prediction and reconstruction samples of the template is calculated. First two intra prediction modes with the minimum SATD (Sum of Absolute Transform Difference) are selected as the TIMD modes. These two TIMD modes are fused with the weights after applying the PDPC process, and such weighted intra prediction is used to code the current CU. Position dependent intra prediction combination (PDPC) is included in the derivation of the TIMD modes.

The costs of the two selected modes are compared with a threshold, in the test the cost factor of 2 is applied as follows:

$$costMode2 < 2 * costMode1.$$

If this condition is true, the fusion is applied, otherwise only mode1 is used.

Weights of the modes are computed from their SATD costs as follows:

$$weight1 = costMode2 / (costMode1 + costMode2)$$

$$weight2 = 1 - weight1$$

**Extended multiple reference line (MRL) list**

MRL (Muti-Reference Line) list in VVC consists in selecting a line of reference samples for intra predicting the current block. It may consist of the line of reconstructed samples adjacent to the current block on its top and left, or of a line farther from current block boundaries. The line used for intra prediction is signaled though a MRL index coded in the bit-stream.

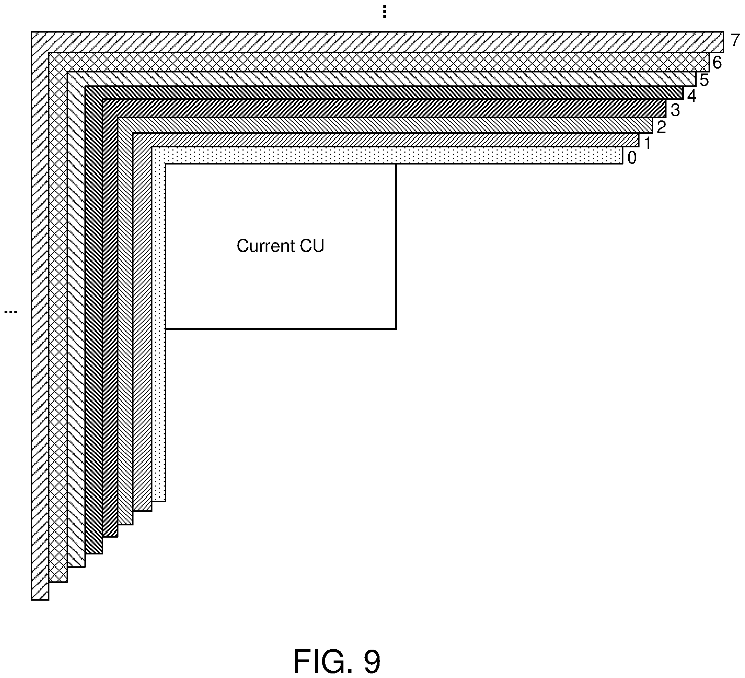

In ECM, MRL is extended to include more reference lines for intra prediction. The extended reference line list consists of line indices {1, 3, 5, 7, 12} as shown in FIG. 9. For template-based intra mode derivation (TIMD), instead of the full MRL candidate list, only the first two reference line candidates, i.e., {1, 3}, are used.

**Template-based multiple reference line intra prediction**

Template-based multiple reference line intra prediction (TMRL) mode combines reference line and prediction mode together and uses a template matching method to construct a list of candidate combinations. An index to the candidate combination list is coded to indicate which reference line and prediction mode is used in coding the current block. The regular multiple reference line (MRL) for the non-TIMD part is replaced by TMRL mode.

The TMRL mode extends reference line candidate list and the intra-prediction-mode candidate list. The extended reference line candidate list is {1, 3, 5, 7, 12}. The restriction on the top CTU row is unchanged. The size of the intra-prediction-mode candidate list is 10. The construction of the intra-prediction-mode candidate list is similar to MPM except the PLANAR mode is excluded from the intra-prediction-mode candidate list, DC mode is added after 5 neighboring PUs' modes and DIMD modes if it is not included and the angular modes with delta angles from $\pm 1$ to $\pm 4$ (compared the existing angular modes in the intra-prediction-mode candidate list) are added. The precision of angular prediction is extended from 65 to 129. Additionally non-adjacent positions are added as candidates in constructing the intra candidate list. If the neighbouring or non-adjacent blocks are coded with SGPM or GPM modes, the intra modes of the blocks are replaced by the partitioning angles.

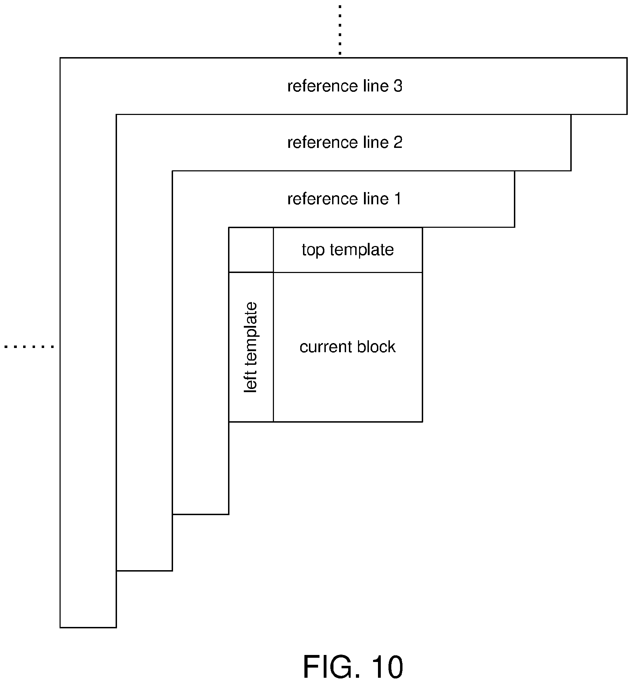

The TMRL candidate is constructed as follows. There are 5x10=50 combinations of the extended reference line and the allowed intra-prediction modes for a block. Since the extended reference line starts from reference line 1, the area covered by reference line 0 is used for template matching. The SAD costs over the template area (see FIG. 10) are calculated between the predictions (generated by 50 combinations) and the reconstructions. The 20 combinations with the least SAD cost are selected in an ascending order to form the TMRL candidate list.

For TMRL signalling instead of coding the reference line and the intra mode directly, an index to the TMRL candidate list is coded to indicate which combination of reference line and prediction mode is used for coding the current block.

**Extrapolation filter-based intra prediction mode (EIP)**

EIP is a new intra prediction mode in ECM. It is processed in three steps. First, the extrapolation filter coefficients are derived from a neighboring reconstructed area of the current block or inherited from a previous EIP block. Second, the extrapolation process generates predicted signals from the top-left to bottom-right corner within the current block. Third, an intra prediction angle is derived by analyzing the gradient of the predicted block, and then the corresponding intra-mode is used to select the MTS, NSPT and LFNST kernel for transformation.

The application of EIP is restricted to blocks with sizes not greater than 32x32 and the luma component only.

**Obtaining the EIP filter**

The following three EIP filter shapes are proposed in this method. There are two ways to obtain the filter coefficients for the current CU in this proposal. First, the coefficients can be derived from the neighboring reconstructed pixels, and second, they can also be inherited from the previously decoded blocks.

**Derivation of EIP coefficients**

The decoder decodes the relevant syntax elements to determine the selected type of reconstructed area and the filter shape for the current block. The selected filter moves in the selected reconstructed area either horizontally or vertically with a one-pixel step to construct the auto-correlation matrix and the cross-correlation vector. The calculation of coefficients from the auto-correlation matrix and the cross-correlation vector is the same as that in CCCM.

The size of the reconstructed area depends on the min(blockWidth, blockHeight) and the selected filter shape. For example, when the current block is an 8x16 block and the selected filter shape is 4x4. The aboveSize of the reconstructed area is equal to min(8, 16) + 4 - 1 = 11, and the leftSize of the reconstructed area is equal to min(8, 16) + 4 - 1 = 11.

**Inheritance of the EIP filters**

The EIP merge mode is also proposed and tested in this contribution. The filter shape and the filter coefficients can be inherited from the previous decoded blocks with EIP or EIP merge mode. The decoder decodes an EIP merge flag to decide whether the proposed merge mode is used when the current block uses the EIP mode. A merge index is further decoded when the EIP merge flag is true. The EIP merge list includes spatial adjacent and non-adjacent candidates, temporal candidates, and history candidates. The constructed EIP merge list can include up to 12 candidates and the list will be reduced to up to 6 candidates by the reordering process based on the SAD cost measured on a 1 column and 1 row template. In the SAD calculation, predictions of the template area by EIP filters are generated only from reconstructed (neighbouring and template) samples, allowing the EIP filters to be applied in parallel rather than sequentially.

**Spatial adjacent, temporal, non-adjacent, shifted temporal candidates and history candidates**

The positions and inclusion order of the spatial adjacent, temporal, non-adjacent, shifted temporal and history candidates are the same as those defined in ECM-10.0 for the CCP merge prediction candidates.

**Prediction of the current block**

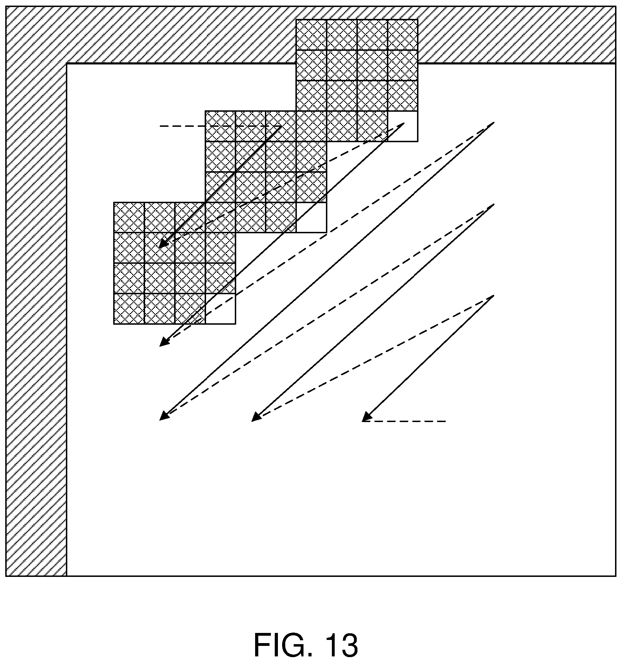

The EIP mode generates prediction values for the current block from the top-left position to the bottom-right position by a diagonal prediction order, as shown in FIG. 13.

The calculation for the prediction values in this contribution is shown as follows,

$$pred_{(x,y)} = \sum_{i=0}^{14} \left( c_i \times t_{(x-offsetX_i, y-offsetY_i)} \right)$$

where $pred_{(x,y)}$ is the predicted value at (x, y) in the current block, $c_i$ is the $i^{th}$ coefficient of the selected EIP filter, the index of the coefficients is from 0 to 14, $t_{(x-offsetX_i, y-offsetY_i)}$ is a reconstructed or a predicted value used for the current position's prediction. $offsetX_i$ and $offsetY_i$ are the position offsets to the current position.

**Spatial Geometric partitioning mode (SGPM)**

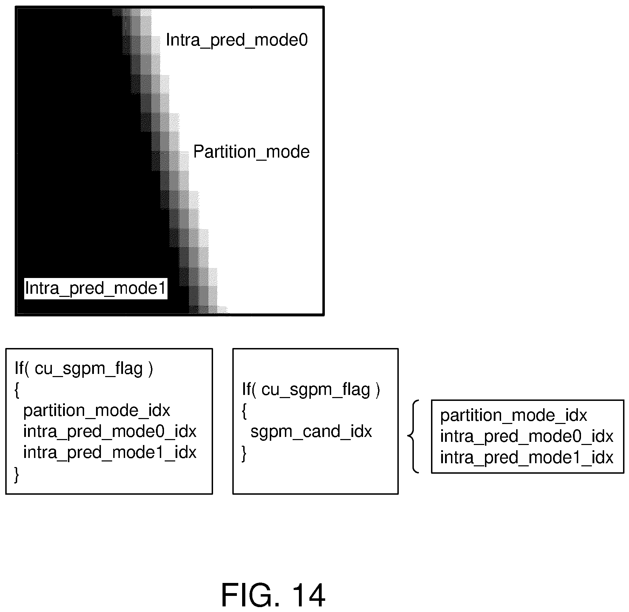

SGPM is an intra mode that resembles the inter coding tool of GPM, where the two prediction parts are generated from intra predicted process. In this mode, a candidate list is built with each entry containing one partition split and two intra prediction modes as shown in FIG. 14. 26 partition modes and 3 of intra prediction modes are used to form the combinations. the length of the candidate list is set equal to 16. The selected candidate index is signalled.

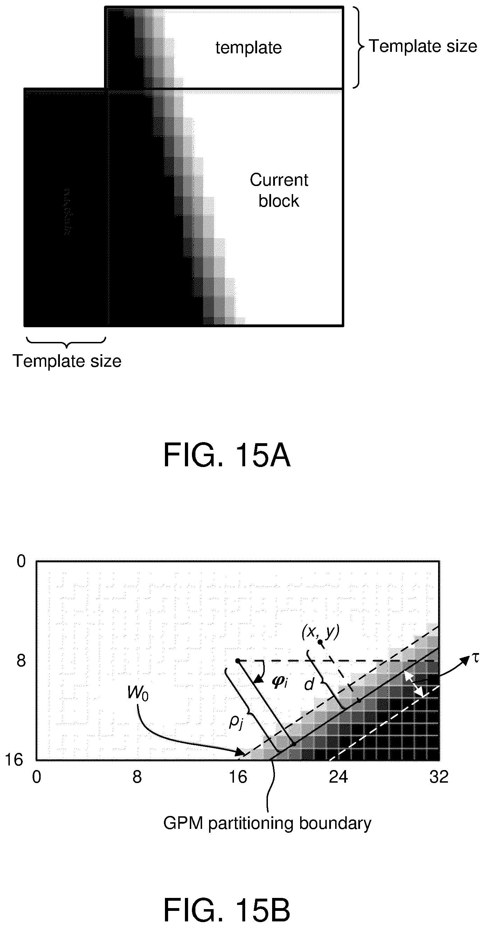

The list is reordered using template (FIG. 15) where SAD between the prediction and reconstruction of the template is used for ordering. The template size is fixed to 1.

For each partition mode, an IPM list is derived for each part. The IPM list size is set to 3. In the list, TIMD derived mode is replaced by 2 derived modes with horizontal and vertical orientations.

The SGPM mode is applied with a restricted blocks size: $4 \leq$ width $\leq 64$, $4 \leq$ height $\leq 64$, width < height*8, height < width*8, width*height $\geq 32$.

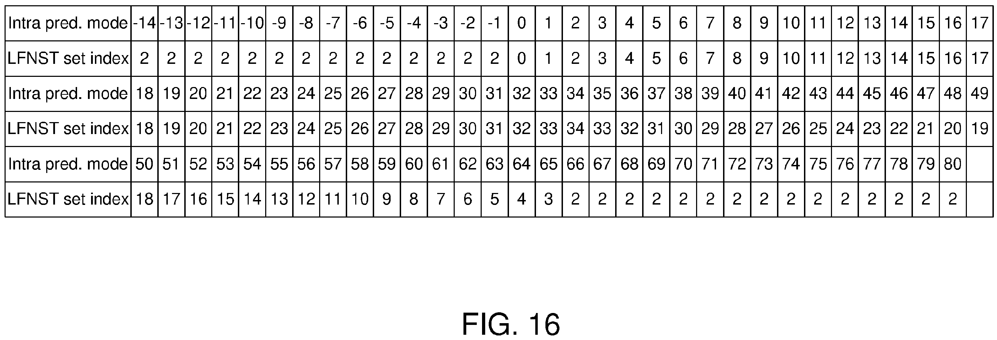

A PPS (Picture Parameter Set) flag is coded to indicate whether no blending of two intra predictions is allowed. When this PPS flag is set to false, the following adaptive blending is also used for spatial GPM, where blending depth $\tau$ shown in FIG. 16 is derived as follows:

- If min(width, height) == 4, 1/2 $\tau$ is selected
- else if min(width, height) == 8, $\tau$ is selected
- else if min(width, height) == 16, 2 $\tau$ is selected
- else if min(width, height) == 32, 4 $\tau$ is selected
- else, 8 $\tau$ is selected.

Otherwise (the PPS flag is set to true), 1/4 $\tau$ is always used for spatial GPM coded blocks to make sure no blending is used when SGPM block has partition angle completely horizontal or vertical, and much narrower blending width is used when SGPM block has other partition angles. It is noted that the flag is set to true in current Common Test Conditions (CTC) for the screen content videos.

**Transform stage in VVC and in ECM**

In VVC, forward LFNST is applied after the DCT2 transform for intra coded blocks. In the decoder side, its inverse transform is applied before the inverse DCT2 transform. It has been shown that this transform stage is associated with a high coding gain.

In ECM, another transform stage is added, named non-separable primary transform (NSPT). This stage replaces DCT2-LFNST stage, where a single non-separable transform is used. This is only allowed for small block, since non-separable transform for large blocks requires huge memory and computation complexity.

**Large block-size transforms with high-frequency zeroing in VVC**

In VVC, large block-size transforms, up to 64×64 in size, are enabled, which are primarily useful for higher resolution videos, e.g., 1080p and 4K sequences. High frequency transform coefficients are zeroed out for the transform blocks with the size (width or height, or both width and height) equal to 64, so that only the lower-frequency coefficients are retained. For example, for an M×N transform block, with M as the block width and N as the block height, when M is equal to 64, only the left 32 columns of transform coefficients are kept. Similarly, when N is equal to 64, only the top 32 rows of transform coefficients are kept. When the transform skip mode is used for a large block, the entire block is used without zeroing out any values. In addition, transform shift is removed in transform skip mode. The VTM (VVC Test model) also supports a configurable maximum transform size in SPS, such that the encoder has the flexibility to choose up to 32-length or 64-length transform size depending on the need of specific implementation.

**Multiple transform selection (MTS) for core transform in VVC**

In addition to DCT-II which has been employed in HEVC, a Multiple Transform Selection (MTS) scheme is used for residual coding for both inter and intra coded blocks. It uses multiple selected transforms from DCT8/DST7. The newly introduced transform matrices are DST-VII and DCT-VIII. Table 1 shows the basis functions of the selected DST/DCT.

**Table1** - **Transform basis functions of DCT-II/ VIII and DST-VII for N-point input**

| Transform Type | Basis function $T_i(j)$, $i,j$ = 0, 1, ..., $N$-1 |
|---|---|
| DCT-II | $T_i(j) = \omega_0 \cdot \sqrt{\frac{2}{N}} \cdot \cos\left(\frac{\pi \cdot i \cdot (2j+1)}{2N}\right)$, where $\omega_0 = \begin{cases} \sqrt{\frac{2}{N}} & i = 0 \\ 1 & i \neq 0 \end{cases}$ |
| DCT-VIII | $T_i(j) = \sqrt{\frac{4}{2N+1}} \cdot \cos\left(\frac{\pi \cdot (2i+1) \cdot (2j+1)}{4N+2}\right)$ |
| DST-VII | $T_i(j) = \sqrt{\frac{4}{2N+1}} \cdot \sin\left(\frac{\pi \cdot (2i+1) \cdot (j+1)}{2N+1}\right)$ |

In order to keep the orthogonality of the transform matrix, the coefficients of the transform matrices are quantized to 10-bit which is more accurate than the transform matrices in HEVC. For VVC version 1 profiles this keeps the intermediate values of transformed coefficients after both horizontal and vertical transforms within the 16-bit range.
In order to control the MTS scheme, separate enabling flags are specified at SPS level for intra and inter, respectively. When MTS is enabled at SPS, a CU level flag is signalled to indicate whether MTS is applied or not. Here, MTS is applied only for luma. The MTS signaling is skipped when one of the below conditions is applied.

-    The position of the last significant coefficient for the luma TB is less than 1 (i.e., DC only).
-    The last significant coefficient of the luma TB is located inside the MTS zero-out region.

If the MTS CU flag is equal to zero, then DCT2 is applied in both directions. However, if the MTS CU flag is equal to one, then two other flags are additionally signalled to indicate the transform type for the horizontal and vertical directions, respectively. Transform and signalling mapping is shown in Table 2. Unified transform selection for ISP (Intra Subpartition) and implicit MTS is used by removing the intra-mode and block-shape dependencies. If the current block is in ISP mode or if the current block is an intra block and both intra and inter explicit MTS is on, then only DST7 is used for both horizontal and vertical transform cores. When it comes to transform matrix precision, 8-bit primary transform cores are used. Therefore, all the transform cores used in HEVC are kept as the same, including 4-point DCT-2 and DST-7, 8-point, 16-point and 32-point DCT-2. Also, other transform cores including 64-point DCT-2, 4-point DCT-8, 8-point, 16-point, 32-point DST-7 and DCT-8, use 8-bit primary transform cores.

**Table 2 - Transform and signalling mapping**

| MTS_CU_flag | MTS_Hor_flag | MTS_Ver_flag | Intra/inter | |
|---|---|---|---|---|
| | | | Horizontal | Vertical |
| 0 | | | DCT2 | |
| 1 | 0 | 0 | DST7 | DST7 |
| | 0 | 1 | DCT8 | DST7 |
| | 1 | 0 | DST7 | DCT8 |
| | 1 | 1 | DCT8 | DCT8 |

To reduce the complexity of large size DST-7 and DCT-8, high frequency transform coefficients are zeroed out for the DST-7 and DCT-8 blocks with the size (width or height, or both width and height) equal to 32. Only the coefficients within the 16x16 lower-frequency region are retained.

As in HEVC, the residual of a block can be coded with the transform skip mode. To avoid the redundancy of syntax coding, the transform skip flag is not signalled when the CU level MTS_CU_flag is not equal to zero. Note that implicit MTS transform is set to DCT2 when LFNST or MIP is activated for the current CU. Also the implicit MTS can be still enabled when MTS is enabled for inter coded blocks.

**Implicit MTS in VVC**

In VVC a mode called Implicit MTS specifies a transform selection mode without any MTS index signaling in the coded bit-stream. When implicit MTS is on, the transform type for a given transform unit is derived from the block shape. This mode is particularly useful for fast encoder implementation, since the rate distortion optimized choice of primary transform is not necessary.

The rule to derive the primary transform is the following one in implicit MTS mode:

$$\text{trTypeHor} = (4 \leq \text{tuWidth} \leq 16) \ ? \ \text{DST7} : \text{DCT2}$$

$$\text{trTypeVer} = (4 \leq \text{tuHeight} \leq 16) \ ? \ \text{DST7} : \text{DCT2}$$

which means that in a given direction (horizontal or vertical), the 1D transform used is DST7 if the TU width is between 4 and 16 included and is DCT2 otherwise.

The usage of Implicit MTS as opposed to explicit MTS (where the MTS index is coded in the bit-stream) is typically signaled at sequence level, in Sequence Parameter Set (SPS).

**Low-frequency non-separable transform (LFNST)**

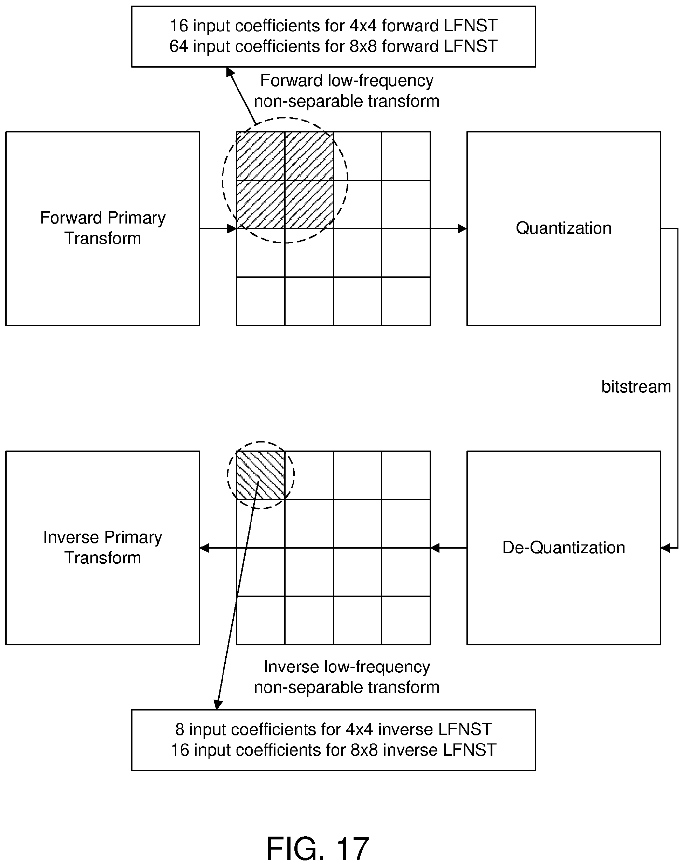

In VVC, LFNST is applied between forward primary transform and quantization (at encoder) and between de-quantization and inverse primary transform (at decoder side) as shown in FIG. 17. In LFNST, 4x4 non-separable transform or 8x8 non-separable transform is applied according to the block size. For example, 4x4 LFNST is applied for small blocks (i.e., min (width, height) < 8) and 8x8 LFNST is applied for larger blocks (i.e., min (width, height) > 4).

Application of a non-separable transform, which is being used in LFNST, is described as follows. To apply 4x4 LFNST, the 4x4 input block $X$

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

is first represented as a vector $\vec{X}$ :

$$\vec{X} = [X_{00} \ X_{01} \ X_{02} \ X_{03} \ X_{10} \ X_{11} \ X_{12} \ X_{13} \ X_{20} \ X_{21} \ X_{22} \ X_{23} \ X_{30} \ X_{31} \ X_{32} \ X_{33}]$$

The non-separable transform is calculated as $\vec{F} = T \cdot \vec{X}$, where $\vec{F}$ indicates the transform coefficient vector, and $T$ is a 16x16 transform matrix. The 16x1 coefficient vector $\vec{F}$ is subsequently re-organized as a 4x4 block using the scanning order for that block (horizontal, vertical or diagonal). The coefficients with the smaller index will be placed with the smaller scanning index in the 4x4 coefficient block.

**Reduced non-separable transform**

LFNST (low-frequency non-separable transform) is based on a direct matrix multiplication approach to apply non-separable transform so that it is implemented in a single pass without multiple iterations. However, the non-separable transform matrix dimension needs to be reduced to minimize computational complexity and memory space to store the transform coefficients. Hence, reduced non-separable transform (RST) method is used in LFNST. The main idea of the reduced non-separable transform is to map an **N** (N is commonly equal to 64 for 8x8 LFNST) dimensional vector to an **R** dimensional vector in a different space, where **N/R (R < N)** is the reduction factor. Hence, instead of N×N matrix, RST matrix becomes an **R×N** matrix as follows:

$$T_{RxN} = \begin{bmatrix} t_{11} & t_{12} & t_{13} & \cdots & t_{1N} \\ t_{21} & t_{22} & t_{23} & & t_{2N} \\ & & \vdots & \ddots & \vdots \\ t_{R1} & t_{R2} & t_{R3} & \cdots & t_{RN} \end{bmatrix}$$

where the **R** rows of the transform are **R** vectors of the **N** dimensional space playing the role of basis function of the LFNST transform.

The inverse transform matrix for RST is the transpose of its forward transform. For 8x8 LFNST, a reduction factor of 4 is applied, and a 64x64 direct matrix, which is conventional 8x8 non-separable transform matrix size, is reduced to a 16x48 direct matrix. Hence, the 48×16 inverse RST matrix is used at the decoder side to generate core (primary) transform coefficients in 8×8 top-left regions. When 16x48 matrices are applied instead of 16x64 with the same transform set configuration, each of which takes 48 input data from three 4x4 blocks in a top-left 8x8 block excluding right-bottom 4x4 block. With the help of the reduced dimension, memory usage for storing all LFNST matrices is reduced from 10KB to 8KB with reasonable performance drop. In order to reduce complexity LFNST is restricted to be applicable only if all coefficients outside the first coefficient sub-group are non-significant. Hence, all primary-only transform coefficients have to be zero when LFNST is applied. This allows a conditioning of the LFNST index signalling on the last-significant position, and hence avoids the extra coefficient scanning in the current LFNST design, which is needed for checking for significant coefficients at specific positions only.

The worst-case handling of LFNST (in terms of multiplications per pixel) restricts the non-separable transforms for 4x4 and 8x8 blocks to 8x16 and 8x48 transforms, respectively. In those cases, the last-significant scan position has to be less than 8 when LFNST is applied, for other sizes less than 16. For blocks with a shape of 4xN and Nx4 and N > 8, the proposed restriction implies that the LFNST is now applied only once, and that to the top-left 4x4 region only. As all primary-only coefficients are zero when LFNST is applied, the number of operations needed for the primary transforms is reduced in such cases. From the encoder perspective, the quantization of coefficients is remarkably simplified when LFNST transforms are tested. A rate-distortion optimized quantization has to be done at maximum for the first 16 coefficients (in scan order), and the remaining coefficients are enforced to be zero.

**LFNST transform selection**

There are totally 4 transform sets and 2 non-separable transform matrices (kernels) per transform set used in LFNST. The mapping from the intra prediction mode to the transform set is pre-defined as shown in Table 3. If one of three CCLM modes (INTRA_LT_CCLM, INTRA_T_CCLM or INTRA_L_CCLM) is used for the current block ($81 \leq$ predModeIntra $\leq 83$), transform set 0 is selected for the current chroma block. For each transform set, the selected non-separable secondary transform candidate is further specified by the explicitly signalled LFNST index. The index is signalled in a bitstream once per Intra CU after transform coefficients.

**Table 3 - Transform selection table**

| IntraPredMode | Transform set index |
|---|---|
| IntraPredMode < 0 | 1 |

(continued)

| IntraPredMode | Transform set index |
|---|---|
| 0 ≤ IntraPredMode ≤ 1 | 0 |
| 2 ≤ IntraPredMode ≤ 12 | 1 |
| 13 ≤ IntraPredMode ≤ 23 | 2 |
| 24 ≤ IntraPredMode ≤ 44 | 3 |
| 45 ≤ IntraPredMode ≤ 55 | 2 |
| 56 ≤ IntraPredMode ≤ 80 | 1 |
| 81 ≤ IntraPredMode ≤ 83 | 0 |

**LFNST index Signaling and interaction with other tools**

Since LFNST is restricted to be applicable only if all coefficients outside the first coefficient sub-group are non-significant, LFNST index coding depends on the position of the last significant coefficient. In addition, the LFNST index is context coded but does not depend on the intra prediction mode, and only the first bin is context coded. Furthermore, LFNST is applied for intra CU in both intra and inter slices, and for both Luma and Chroma. If a dual tree is enabled, LFNST indices for Luma and Chroma are signaled separately. For inter slice (the dual tree is disabled), a single LFNST index is signaled and used for both Luma and Chroma.

Considering that a large CU greater than 64x64 is implicitly split (TU tiling) due to the existing maximum transform size restriction (64x64), an LFNST index search could increase data buffering by four times for a certain number of decode pipeline stages. Therefore, the maximum size that LFNST is allowed is restricted to 64x64. Note that LFNST is enabled with DCT2 only. The LFNST index signaling is placed before MTS index signaling.

**MTS in ECM**

**Enhanced MTS for intra coding in ECM**

In the VVC design, for MTS, only DST7 and DCT8 transform kernels are utilized which are used for intra and inter coding.

Additional primary transforms including DCT5, DST4, DST1, and identity transform (IDT) are employed in the current ECM design. Also the MTS set is made dependent on the TU size and intra mode information. For blocks predicted via IntraTMP, the DIMD process (Decoder Side Intra Mode Derivation) is used on the predition block to derive an intra mode that is used for transform selection. Specifically, a horizontal gradient and a vertical gradient are calculated for each predicted sample to build a HoG (Histogram of Gradients). Then the intra prediction mode with the largest histogram amplitude values is used to select the MTS transform set.

Overall, 16 different TU sizes are considered, and for each TU size 5 different classes are considered depending on intra-mode information. For each class, 1, 4 or 6 different transform pairs are considered. The number of intra MTS candidates is adaptively selected (between 1, 4 and 6 MTS candidates) depending on the sum of absolute value of transform coefficients. The sum is compared against the two fixed thresholds to determine the total number of allowed MTS candidates:

- 1 candidate: sum ≤ th0

- 4 candidates: th0 < sum ≤ th1

- 6 candidates: sum > th1

Note, although a total of 80 different classes are considered, some of those different classes often share exactly same transform set. So there are 58 (less than 80) unique entries in the resultant LUT.

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80.

**Inter MTS optimization in ECM**

For the MTS of inter-coded CUs, four candidates: {(DST7, DST7), (DST7, DCT8), (DCT8, DST7), (DCT8, DCT8)} are used for every CU. For the larger resolution sequences (width > 1080) the maximum CU size for Inter-MTS usage is set to 32 (i.e., Inter-MTS is used for CU with width $\leq$ 32 and height $\leq$ 32), and for the remaining sequences (smaller resolution) it is set to 16. For 4-pt, 8-pt and 16-pt transforms, the current AMT (Adaptive Multiple Transform) transform cores, i.e., DST-7 and DCT-8, is replaced with separable KLTs, as proposed in JVET-J0021.

**LFNST in ECM**

The LFNST design in VVC is extended as follows:

- The number of LFNST sets ($S$) and candidates per set ($C$) are extended to $S$ = 35 and $C$ = 3, and the LFNST set (lfnstTrSetIdx) for a given intra mode (predModeIntra) is derived according to the following formula:

  ○ For predModeIntra < 0, lfnstTrSetIdx is equal to 2
  ○ lfnstTrSetIdx = predModeIntra, for predModeIntra in [0, 34]
  ○ lfnstTrSetIdx = 68 - predModeIntra, for predModeIntra in [35, 66]

- Three different kernels, LFNST4, LFNST8, and LFNST16, are defined to indicate LFNST kernel sets, which are applied to 4xN/Nx4 (N$\geq$4), 8xN/Nx8 (N$\geq$8), and MxN (M, N$\geq$16), respectively.

The kernel dimensions are specified by:

(LFSNT4, LFNST8*, LFNST16*) = (16x16, 32x64, 32x96)

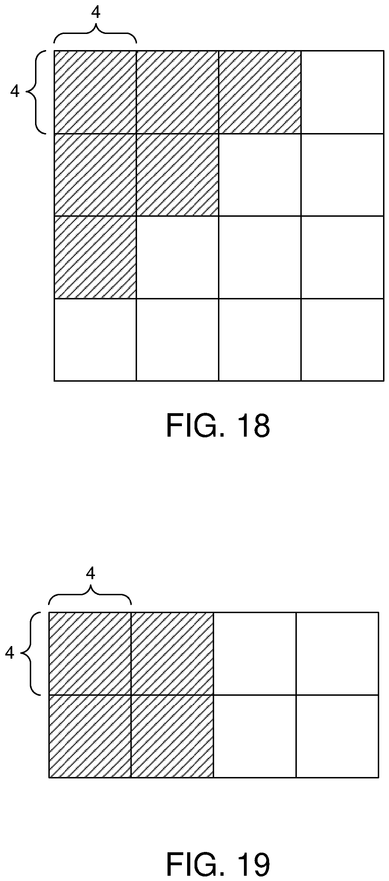

The forward LFNST is applied to top-left low frequency region, which is called Region-Of-Interest (ROI). When LFNST is applied, primary-transformed coefficients that exist in the region other than ROI are zeroed out, which is not changed from the VVC standard.
The ROI for LFNST16 is depicted in FIG. 18. It consists of six 4x4 sub-blocks, which are consecutive in scan order. Since the number of input samples is 96, the transform matrix for forward LFNST16 can be Rx96. R is chosen to be 32 in ECM, 32 coefficients (two 4x4 sub-blocks) are generated from forward LFNST16 accordingly, which are placed following the coefficient scan order.
The ROI for LFNST8 is shown in FIG. 19. The forward LFNST8 matrix can be Rx64 and R is chosen to be 32. The generated coefficients are located in the same manner as with LFNST16.
The mapping from intra prediction modes to these sets is shown in FIG. 16.

**Mutual exclusive usage of LFNST and non-DCT2 primary transform**

Note that LFNST can be used only for blocks coded with DCT2-DCT2 as the primary transform pair, both in VVC and in ECM.
In terms of the decoding process, this implies that the LFNST index is decoded first from the bit-stream. Then, if the LFNST index of a considered CU is non-zero, then the MTS index is not decoded, and DCT2-DCT2 is inferred as the primary transform pair of the considered block (corresponding to MTS index equal to 0).
Note that additional conditions for the MTS index to be decoded, and not inferred to 0, include the following ones:

- The transform skip flag, decoded before transform coefficients, is equal to false;
- The Last Significant decoded coefficient position in scanning order is at least 1;
- The coding unit is not in ISP or SBT mode;
- MTS is enabled w.r.t with the CU coding mode (Intra, Inter) and CU size.

**NSPT in ECM**

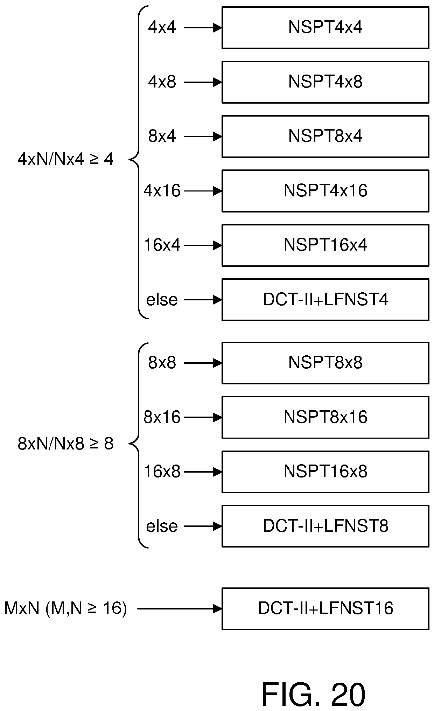

NSPT replaces the 2 stages of transform (DCT2-LFNST) by a single non-separable transform. This is only allowed for small blocks as indicated in FIG. 20.

All NSPTs consist of 35 sets and 3 candidates for each set (similar to the current LFNST). The kernels of NSPT have the following shapes:

- NSPT4x4: 16x16

- NSPT4x8/NSPT8x4: 32x20

- NSPT8x8: 64x32

- NSPT4×16/NSPT16×4: 64x24

- NSPT8×16/NSPT16×8: 128x40

Therefore, 12, 32, 40 and 88 coefficients are zeroed-out using NSPT4x8/NSPT8x4, NSPT8x8, NSPT4x16/NSPT16x4 and NSPT8×16/NSPT16×8, respectively.

**NSPT extension proposed in JVET-AI0255**

In contribution JVET-AI0255 (see an article by Marta Karczewicz et al., "Non-EE2: NSPT kernels for non-regular intra modes," Document: JVET-AI0255, Joint Video Experts Team (JVET) of ITU-T SG 16 WP 3 and ISO/IEC JTC 1/SC 29, 35th Meeting, Sapporo, JP, July 2024), it is proposed to introduce an additional set of NSPT kernels to ECM, only for blocks with width ≤ 16, height ≤ 16 and width * height < 256 and where the intra coding modes are either DIMD, TIMD, or SGPM, MIP or EIP. The usage of the additional set is implicit and no additional signaling is required. The proposal provides coding efficiency improvement over ECM.

It is observed that in ECM, for a number of block sizes, NSPT replaces LFNST. Thus, LFNST cannot be used. On the other hand, it is noted that using NSPT in place of LFNST for certain blocks sizes brings limited, if not negligible, coding efficiency improvement, compared to using LFNST. Therefore, for some blocks, it may be more efficient to use LFNST rather than NSPT, and vice versa.

In this application, we attempt to improve the video compression efficiency of state-of-the-art video codecs, in particular with respect to the transform and inverse transform stage design. The basic principle of the present application is to make it possible to use either NSPT or LFNST for certain block sizes, instead of replacing LFNST by the systematic usage of NSPT. To do so, an adaptive choice between LFNST and NSPT is taken by the encoder at block level, and the type of transform used, between LFNST and NSPT, is signaled into the bit-stream.

The following characteristics may be applied. They are detailed in the following of this document.

1. Encoder side: when coding a transform block whose size allows NSPT, choose between the usage of NSPT or DCT2 + LFNST, or MTS as the transform to apply.

2. Decoder side: when decoding a residual block whose size allows NSPT, decode a TB-level flag indicating the usage of NSPT or LFNST.

3. Decoder side: when decoding a residual block whose size allows NSPT and the last significant coefficient position allows both LFNST and NSPT, decode a TB-level flag indicating the usage of NSPT or LFNST.

4. Decoder side: characteristics 3 where, when decoding a residual block whose size allows NSPT and LFNST, where the last significant coefficient position allows NSPT but not LFNST, infer the TB-level flag of characteristics 3 to NSPT.

5. Decoder side: characteristics 3 where, when decoding a residual block whose size allows NSPT and LFNST, where the last significant coefficient position allows LFNST but not NSPT, infer the TB-level flag of characteristics 3 to LFNST.

6. Variant: characteristics 3 where, if the TB to code/decode belongs to an intra CU, according to the intra prediction mode assigned to the CU, infer the usage of LFNST and NSPT.

7. Variant: characteristics 3 where, the flag indicating the use of LFNST or NSPT at block size where both LFNST and NSPT are allowed is CABAC coded with a dedicated context.

8. Characteristics 7 where the CABAC context used to code the flag depends on the size of the transform block.

9. Characteristics 7 where the CABAC context used to code the flag depends on the value of the last significant coefficient scanning position in the considered transform block.

10. Characteristics 7 where the CABAC context used to code the flag depends on the sum of magnitudes of coefficients contained in the considered transform block.

11. Any of the preceding characteristics where the proposed competition between LFNST and NSPT takes place only for blocks coded in certain coding modes. Typically, in intra blocks coded in some special intra modes, LFNST/NSPT takes place.

12. Characteristics 11 where the intra modes allowing NSPT/LFNST competition are angular intra prediction modes.

13. Characteristics 11 where the intra modes allowing NSPT/LFNST competition are special intra prediction modes among DIMD, TIMD, SGPM, MIP, EIP, IntraTMP.

14. Characteristics 11 where proposed NSPT/LFNST competition takes place in IBC coded blocks.

15. Characteristics 11 where proposed NSPT/LFNST competition takes place in Inter coded blocks.

16. Characteristics 14 or 15 where proposed NSPT/LFNST competition takes place in the AMVP sub-mode or Inter or IBC.

17. Characteristics 14 or 15 where proposed NSPT/LFNST competition takes place in the Merge sub-mode or Inter or IBC.

18. Alternative to characteristics 3 where the usage of LFNST or NSPT is signaled via the LFNST index syntax element, and where some pre-defined values of LFNST/NSPT index indicates an LFNST transform index and some other value indicate an NSPT transform index, when both LFNST and NSPT are allowed for the considered TB.

19. Characteristics 18 where indices respectively associated to LFNST and NSPT may be arranged in an interleaved way, in the series of possible non-separable transform indices. For example, lfnst_idx = 1 means first NSPT transform, lfnst_idx = 2 means first LFNT transform, and lfnst _idx = 3 means second NSPT transform, etc.

**Decoding the LFNST/NSPT index according to ECM11**

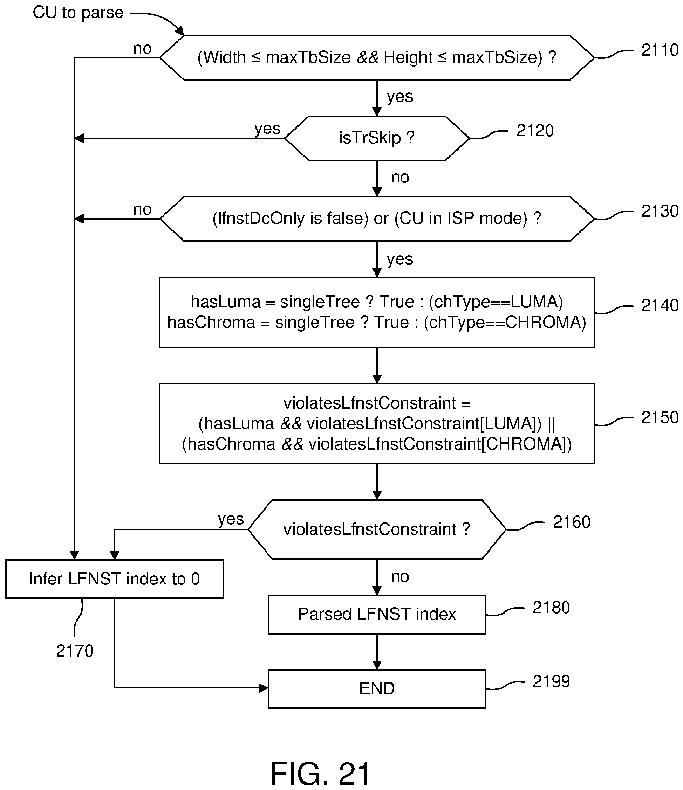

FIG. 21 shows the process used in ECM11 to decode the LFNST/NSPT index of a coding unit.
This process takes place after the transform units contained in the considered CU have been decoded. Thus, at this stage of the overall CU decoding process, the decoder has parsed all transform coefficients contained in each transform block of the considered CU. The input to the process is the current CU being decoded.
First, the decoder checks (2110) if the CU size conforms to the maximum Tansform Block size, which is 128 in ECM. If not, then LFNST is inferred to be off (LFNST index set to 0, 2170) and the process is over (2199).
If yes, the decoder checks (2120) if the current CU is in transform skip mode. If yes, then LFNST index is inferred (2170) to zero, meaning that LFNST/NSPT is not used for the current CU, and the process is over (2199).
If not, then the decoder checks (2130) if the so-called lfnstDcOnly condition is false. This condition is defined as follows in ECM.

- If the current CU has some luma component residual, and the last significant coefficient position in luma component is non-zero, then condition lfnstDcOnly is set to false.
- If the CU is in intra mode and for at least one component the last significant scan position is non-zero, then condition lfnstDcOnly is set to false.
- If none of the above condition is true, then condition lfnstDcOnly condition is set to true.

The decoder checks (2130) if lfnstDcOnly is false or the CU is in ISP mode. If not, then the LFNST index of the current CU is inferred (2170) to zero, meaning LFNST/NSPT is off for the current CU.
Next, if the test is positive, then the decoder computes (2140) the so-called violateLfnstConstraint. First hasLuma and hasChroma flags are computed (2140). Flag hasLuma is true if the CU has some luma residual data, i.e., the CU is in single tree mode or the CU is in dual tree mode and current channel type is luma. Flag hasChroma is true if the CU has some chroma residual data, i.e., the CU is in single tree mode or CU is in dual tree mode and the current channel type is chroma. Then, the CU-level violateLfnstConstraint is computed (2150) as follows:

violatesLfnstConstraint = (hasLuma && violatesLfnstConstraint[LUMA]) ‖ (hasChroma && violatesLfnstConstraint [CHROMA])

where the violatesLfnstConstraint[LUMA]) is set to true if the last significant coefficient position scanning order is higher than a threshold, in a Luma transform block (TB) in the considered CU. In ECM, this threshold is defined according to whether NSPT is allowed for the considered CU or not. If allowed, the last position threshold is defined as shown in Table 4, in NSPT column. If not allowed, then only LFNST is allowed in considered CU, and the last position threshold is defined as shown in Table 4, in LFNST column.

**Table 4 - Maximum allowed last significant coefficient scan position, respectively for LFNST and NSPT**

| Block size | LFNST | NSPT |
|---|---|---|
| 4×4 | 16 | 16 |
| 4×8, 8×4 | 16 | 20 |
| 8×8 | 16 | 32 |
| 4×16,16×4 | 16 | 24 |
| 8×16,16×8 | 32 | 40 |
| 4×32,32×4 | 16 | 20 |
| 8×32,32×8 | 32 | 24 |
| 16×16 | 32 | NA |
| 16×32,32×16 | 32 | NA |
| 32×32 | 32 | NA |
| N×64,64×N | 32 | NA |
| N×128,128×N | 32 | NA |

The condition violatesLfnstConstraint[CHROMA]) is set to true if the last significant coefficient position scanning order is higher than a threshold, in a Chroma transform block (TB) of considered CU. In ECM, this threshold is defined according to whether NSPT is allowed for the considered CU or not. If allowed, the last position threshold is defined as shown in Table 4, in NSPT column. If not allowed, then only LFNST is allowed in considered CU, and the last position threshold is defined as shown in Table 4, in LFNST column.

Then once overall CU-level violatesLfnstConstraint condition is computed, it is checked (2160). If true, then the LFNST index is inferred (2170) to 0 by the decoder, meaning no LFNST/NSPT is used for the considered CU. Otherwise, LFNST/NSPT is allowed, and the decoder decodes (2180) the LFNST index. This index indicates the NSPT or LFNST transform used in the current CU.

Note that in ECM11, for block sizes where NSPT is allowed, NSPT is used instead of LFNST when LFNST index is non-zero. There is no possibility to choose between NSPT and LFNST at CU level.

## Proposed method for decoding LFNST/NSPT index

In one embodiment, we allow the adaptive choice of the non-separable transform to be applied to a CU at encoder side, and to derive the non-separable transform used at decoder side, in order to perform the corresponding inverse transform.

In addition, it is proposed to take advantage of different rules for the allowance of NSPT and LFNST to make the decoder infer the type of non-separable transform used as much as possible. This limits the amount of explicit signaling needed to indicate to the decoder which type of non-separable transform to use for a given CU. Specifically, the normative rules which are used to infer the LFNST/NSPT transform type at decoder side are the rules related to the last significant (i.e., non-zero) quantized coefficient in scanning order. Indeed, both for LFNST and NSPT, this last position shall not exceed a certain threshold value, otherwise LFNST/NSPT is inferred to be off at decoder side. Moreover, the threshold values differ between LFNST and NSPT for many block sizes, as is illustrated in Table 4.

As a matter of fact, if the last significant coefficient position is beyond both LFNST and NSPT thresholds, then both LFNST and NSPT transform type can be inferred to be off at decoder side. In addition, when the last significant coefficient position is comprised between the LFNST and NSPT thresholds, then it is possible to infer at decoder side that one transform type is necessarily off, and the other type is allowed. In these both cases, no explicitly signaling for the type of non-separable transform used is needed. Lastly, when the last significant coefficient position is lower or equal to both LFNST and NSPT thresholds, then it is needed to signal which kind of non-separable transform is used for the CU being processed, to make the decoder know which inverse transform to apply.

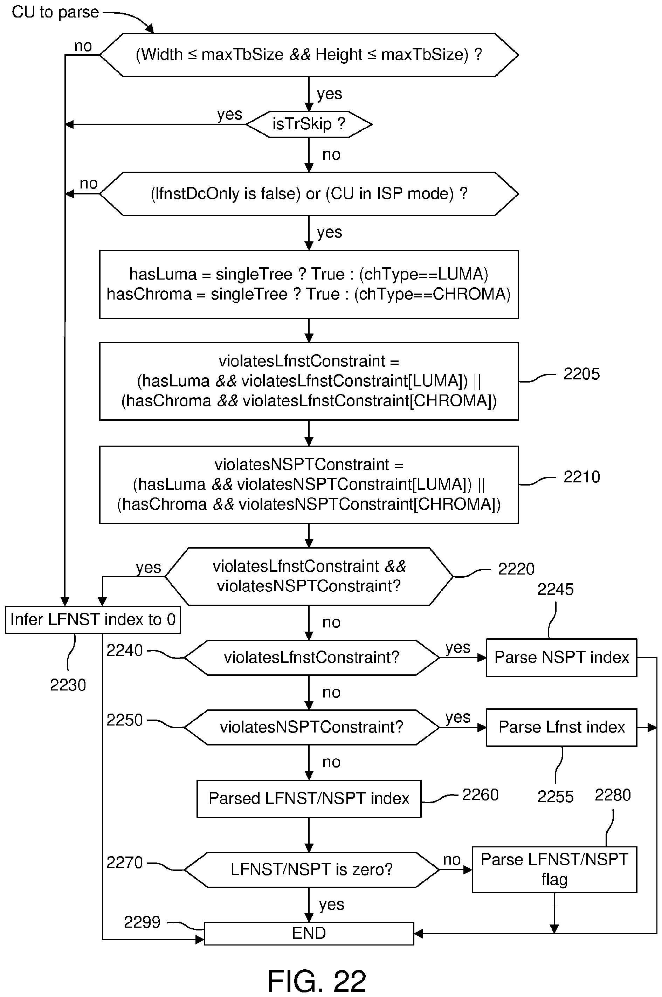

FIG. 22 shows the LFNST index decoding process according to present embodiment. The beginning of the process is the same as in ECM11. The difference with ECM11 starts from the violateLfnstConstraint condition computation.

Indeed, the violateLfnstConstraint is now computed (2205) as:

violatesLfnstConstraint = (hasLuma && violatesLfnstConstraint[LUMA]) ‖ (hasChroma && violatesLfnstConstraint[CHROMA]) Which is similar as in ECM11, but now conditions violatesLfnstConstraint[LUMA] and violatesLfnstConstraint[CHROMA] are computed by taking into account only LFNST thresholds of Table 4, regardless of whether NSPT is allowed or not for the current CU.

That is, violatesLfnstConstraint[LUMA]) is set to true if the last significant coefficient position in scanning order is higher than a threshold in a Luma transform block (TB) in the considered CU. This threshold is defined regardless of whether NSPT is allowed for the considered CU or not. The last position threshold is defined as shown in Table 4, in LFNST column.

Similarly, violatesLfnstConstraint[CHROMA] is set to true if the last significant coefficient position in scanning order is higher than a threshold, in a Chroma transform block (TB) in the considered CU. This threshold is defined regardless of whether NSPT is allowed for the considered CU or not. The last position threshold is defined as shown in Table 4, in LFNST column.

Next, the CU-level violatesNSPTConstraint condition is defined (2210) as:

$$violatesNSPTConstraint =$$
$$(hasLuma\ \&\&\ violatesNSPTConstraint[LUMA])\ \|$$
$$(hasChroma\ \&\&\ violatesNSPTConstraint[CHROMA])$$

That is, violatesNSPTConstraint[LUMA]) is set to true if the last significant coefficient position in scanning order is higher than a threshold, in a Luma transform block (TB) in the considered CU. This threshold is defined regardless of whether NSPT is allowed for the considered CU or not. The last position threshold is defined as shown in Table 4, in NSPT column.

Similarly, violatesLfnstConstraint[CHROMA] is set to true if the last significant coefficient position in scanning order is higher than a threshold, in a Chroma transform block (TB) in the considered CU. This threshold is defined regardless of whether NSPT is allowed for the considered CU or not. The last position threshold is defined as shown in Table 4, in NSPT column.

Thus, conditions violatesLfnstConstraint and violatesNSPTConstraint indicate if the scanning position of last significant coefficients in the CU conform to the usage of LFNST and NSPT, respectively.

The remaining process of FIG. 22 is in decoding LFNST or NSPT transform used for the current CU, if any, and to determine if NSPT or LFNST is used for the current CU, when both LFNST and NSPT are allowed for current CU.

First, if none of the LFNST and NSPT is allowed (2220), then LFNST index is inferred (2230) to 0, meaning that neither LFNST nor NSPT is used in the current CU. If at least one transform type among LFNST and NSPT is allowed, then the following applies.

A test checks (2240) if LFNST is disallowed for the current CU with respect to condition violatesLfnstConstraint. If yes, then the transform type is inferred to be NSPT, and the NSPT index is decoded (2245).

The decoder also checks (2250) if NSPT is disallowed for the current CU, with regards to condition violatesNSPTConstraint. If yes, then the transform type is inferred to be LFNST, and the LFNST index is decoded (2255).

If both conditions violatesLfnstConstraint and violatesNSPTConstraint are not true, both LFNST and NSPT are allowed regarding the last significant coefficient position rule. In this case, the LFNST/NSPT transform index is decoded (2260).

Next if the LFNST/NSPT index is different from 0 (2270), meaning that either LFNST or NSPT is used for current CU, a flag, indicating which one of the LFNST or NSPT transform type is used, is decoded (2280). Then the process of FIG. 22 is over.

As one understands, the process of FIG. 22 enables the adaptive choice of LFNST and NSPT for a given CU. At encoder side, the choice may be done on a rate distortion cost minimization between all allowed LFNST and NSPT transforms, so as to choose the best transform to be applied to considered CU. At the decoder side, as shown in FIG. 22, the parsing of the coded bit-stream allows determining which one of the NSPT or LFNST inverse transform is to be used to as to decode and reconstruct the considered coding unit.

At the encoder side, for a given CU, the three first conditions of FIG. 22 are checked the same way as on the decoder side. If these checks allow the use of a non-separable transform (LFNST or NSPT) for the considered CU, then the hasLuma and hasChroma conditions are computed the same as on the decoder side. Next, the encoder may apply a rate distortion optimization loop over the two candidate non-separable transforms LFNST and NSPT, and for each of them, a loop on candidate non-separable transform matrix (indicated by LFNST/NSPT index). For LFNST and NSPT transform type and for each candidate LFNST/NSPT index for that transform type, the current CU's residual block is transformed by means of the candidate transform type and index, and then quantized and entropy coded. The distortion between the de-quantized and original transform coefficients is then computed, as well as the rate cost resulting from entropy coding. This leads to the computation of a rate distortion cost $(D + \lambda. R)$ for each candidate LFNST or NSPT transform, and the candidate with minimum rate distortion cost is chosen by the encoder. Note during the transform and quantization process, transform coefficients with index beyond the thresholds associated to the considered violatesLfnstConstraint or violatesNSPTConstraint conditions are carefully set to zero by the encoder, to ensure the coded residual conforms to these conditions.

**Competition between LFNST and NSPT, without any explicit signaling of the LFNST/NSPT non-separable transform type**

In another embodiment, the competition between LFNST and NSPT takes place without any explicit signaling of the non-separable transform type at all. This is achieved by allowing LFNST/NSPT to be used for block sizes where NSPT and LFNST are allowed, i.e., for block sizes where NSPT is allowed according to the ECM rules of FIG. 20 with respect to the NSPT rule described before. Then, the following applies.

At the decoder side:

- If the last significant coefficient position in the coded residual block is such that condition violatesLfnstConstraint is true, but violatesNSPTConstraint is false, then NSPT is allowed and LFNST is not allowed. Thus, the decoder infers that NSPT is used, in case the decoded LFNST/NSPT index value is non-zero.

- Conversely, if the last significant coefficient position in the coded residual block is such that condition violatesNSPTConstraint is true, but violatesLFNSTConstraint is false, then LFNST is allowed and NSPT is not allowed. Thus, the decoder infers that LFNST is used, in case the decoded LFNST index value is non-zero.

- If the last significant coefficient position in the coded residual block is such that both conditions violatesNSPTConstraint and violatesLFNSTConstraint are true, then neither LFNST nor NSPT is allowed. Thus, the decoder infers that no NSPT or LFNST is used, and LFNST index is not decoded but is inferred to 0 instead.

- If the last significant coefficient position in the coded residual block is such that both conditions violatesNSPTConstraint and violatesLFNSTConstraint are false, then NSPT is the transform type inferred by the decoder. Thus, the decoder infers that NSPT is used if the decoded LFNST/NSPT index value is non-zero.

At the encoder side:

- NSPT transform is tested for the current CU. If this leads to a coded residual block where the last significant coefficient position is such that violatesNSPTConstraint is false but violatesLFNSTConstraint is true, then this NSPT usage is eligible for the transform type choice of the encoder for considered coding unit.

- LFNST transform is tested for the current CU. If this leads to a coded residual block where the last significant coefficient position is such that violatesLFNSTConstraint is false but violatesNSPTConstraint is true, then this LFNST usage is eligible for the transform type choice of the encoder for considered coding unit.

- Residual coding is also tested with LFNST index equal to 0, i.e. with LFNST and NSPT deactivated.

- The three transform coding mode are put in rate distortion cost-based competition with each other, and with other transform coding like MTS for instance, and the best overall transform coding mode is selected for the considered CU.

As already mentioned before, the following variants of the embodiments may be employed.

In a variant, if the TB to code/decode belongs to an intra CU, according to the intra prediction mode assigned to the CU, infer the usage of LFNST and NSPT.

In a variant, the flag indicating the use of LFNST or NSPT at a block size where both LFNST and NSPT are allowed may be CABAC entropy coded with a dedicated context. In one example, the CABAC context used to code the flag may depend on the size of the transform block. In another example, the CABAC context used to code the flag may depend on the value of the last significant coefficient scanning position in the considered transform block. In yet another example, the CABAC context used to code the flag may depend on the sum of magnitudes of coefficients contained in the considered transform block.

In a further variant, the proposed competition between LFNST and NSPT may take place only for blocks coded in certain coding modes. Typically, in intra blocks coded in some special intra modes, LFNST/NSPT competition may take place. For example, the intra modes allowing NSPT/LFNST competition are angular intra prediction modes.

In a further variant, the intra modes allowing NSPT/LFNST competition are special intra prediction modes among DIMD, TIMD, SGPM, MIP, EIP, IntraTMP. In a further variant, proposed NSPT/LFNST competition takes place in IBC coded blocks. In a further variant, proposed NSPT/LFNST competition takes place in Inter coded blocks. In a further variant, proposed NSPT/LFNST competition takes place in the AMVP sub-mode or Inter or IBC. In a further variant, proposed NSPT/LFNST competition takes place in the Merge sub-mode or Inter or IBC.

In a further variant, the usage of LFNST or NSPT is signaled via the LFNST index syntax element, and where some pre-defined values of LFNST index indicates an LFNST transform index and some other value indicate an NSPT transform index, when both LFNST and NSPT are allowed for the considered TB.

In a further variant, indices respectively associated to LFNST and NSPT may be arranged in an interleaved way, in the series of possible non-separable transform indices. For example, lfnst_idx = 1 means first NSPT transform, lfnst_idx = 2 means first LFNT transform, lfnst_idx = 3 means second NSPT transform, etc.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, transform and inverse transform described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.
> ii. A bitstream that includes one or more of the described syntax elements, or variations thereof, whether transmitted, stored, or otherwise made available.
> iii. Creating, transmitting, receiving, and/or decoding of the bitstream.
> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

 i. session description protocol (SDP), for example as described in RFCs and/or used in conjunction with real-time transport protocol (RTP) transmission.
 ii. hypertext transfer protocol (HTTP) live Streaming (HLS) manifest transmitted over HTTP.
 iii. dynamic adaptive streaming over HTTP (DASH) media presentation description (MPD) descriptors, for example as used in DASH and transmitted over HTTP.
 iv. RTP header extensions, for example as used during RTP streaming.
 v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method of video decoding, comprising:

   determining that a first transform method and a second transform method are both allowed for a current block, wherein the first transform method uses a primary separable transform followed by a non-separable secondary transform, and wherein the second transform method uses a single non-separable transform;
   selecting a transform method from the first transform method and the second transform method for the current block; and
   decoding the current block based on the selected transform method for the block.

2. An apparatus for video decoding, comprising one or more processors and at least one memory coupled to the one or more processors, wherein the one or more processors are configured to:

   determine that a first transform method and a second transform method are both allowed for a current block, wherein the first transform method uses a primary separable transform followed by a non-separable secondary transform, and wherein the second transform method uses a single non-separable transform;
   select a transform method from the first transform method and the second transform method for the current block; and
   decode the current block based on the selected transform method for the block.

3. The method of claim 1, the selecting a transform method comprising, or the apparatus of claim 2, wherein the one or more processors are further configured to perform:
   decoding one or more syntax elements to indicate which one of the first and second transform methods is used and which transform basis is used for the selected transform method.

4. The method of claim 1, or the apparatus of claim 2, wherein the second transform method is selected without explicit signaling.

5. The method of claim 4, or the apparatus of claim 4, wherein the second transform method is selected based on an intra prediction mode of the current block.

6. A method of video encoding, comprising:

   encoding a current block by a first transform method, wherein the first transform method uses a primary separable transform followed by a non-separable secondary transform;
   encoding the current block by a second transform method, wherein the second transform method uses a single non-separable transform;
   selecting a transform method from the first transform method and the second transform method for the current block based on the encoding the current block by the first and second transform methods; and
   encoding the current block based on the selected transform method for the block.

7. An apparatus for video encoding, comprising one or more processors and at least one memory coupled to the one or more processors, wherein the one or more processors are configured to:

   encode a current block by a first transform method, wherein the first transform method uses a primary separable transform followed by a non-separable secondary transform;
   encode the current block by a second transform method, wherein the second transform method uses a single non-separable transform;
   select a transform method from the first transform method and the second transform method for the current block based on the encoding the current block by the first and second transform methods; and
   encode the current block based on the selected transform method for the block.

8. The method of claim 6, wherein the method further comprises, or the apparatus of claim 7, wherein the one or more processors are further configured to perform:
   encoding one or more syntax elements to indicate which one of the first and second transform methods is used and which transform basis is used for the selected transform method.

9. The method of claim 3 or 8, or the apparatus of claim 3 or 8, wherein the one or more syntax elements include a flag indicating which one of the first and second transform methods is used, wherein the flag is context coded in arithmetic coding.

10. The method of claim 9, or the apparatus of claim 9, wherein the context depends on at least one of the following:

   - a size of the current block,
   - a value of a last significant coefficient scanning position in the current block, and
   - a sum of magnitudes of coefficients in the current block.

11. The method of any one of claims 1, 3-6 and 8-10, or the apparatus of claims 2-5 and 7-10, wherein the selecting a transform method is only performed responsive to the current block is coded in a particular coding mode.

12. The method of claim 11, or the apparatus of claim 11, wherein the particular coding mode is one of the following:

   - an angular intra prediction mode,
   - DIMD, TIMD, SGPM, MIP, EIP or IntraTMP,
   - an Intra Block Copy mode,
   - an inter prediction mode, and
   - a merge mode.

13. The method of any one of claims 1, 3-6 and 8-12, or the apparatus of claims 2-5 and 7-12, wherein a single index is used to signal which transform basis function is used for the first transform method and the second transform method.

14. The method of claim 13, or the apparatus of claim 13, wherein index values for the first transform method and the second transform method are interleaved for the single index.

15. The method of any one of claims 1, 3-6 and 8-14, or the apparatus of claims 2-5 and 7-14, wherein the determining that a first or second transform method is allowed is based on a last significant coefficient scanning position of the current block.

FIG. 1

EP 4 730 791 A1

FIG. 2

EP 4 730 791 A1

FIG. 3

EP 4 730 791 A1

FIG. 4

FIG. 5

$$\omega_1 = \frac{43}{64} \times \frac{ampl(M_1)}{ampl(M_1)+ampl(M_2)}$$

$$\omega_2 = \frac{43}{64} \times \frac{ampl(M_2)}{ampl(M_1)+ampl(M_2)}$$

$$\omega_3 = \frac{21}{64}$$

Predictor block

$$\Sigma^3_{i=1}\omega_i \times Pred_i$$

FIG. 6

FIG. 7

Best matching Template

Reconstructed area

Ref block

intraTMP BV

Template

IntraTMP block

Cur Block (IBC)

FIG. 8

Current CU

FIG. 9

reference line 3

reference line 2

reference line 1

top template

current block

left template

FIG. 10

FIG. 11

input of EIP

output of EIP

EP 4 730 791 A1

FIG. 12

FIG. 13

```
If( cu_sgpm_flag )
{
  partition_mode_idx
  intra_pred_mode0_idx
  intra_pred_mode1_idx
}
```

```
If( cu_sgpm_flag )
{
  sgpm_cand_idx
}
```

```
partition_mode_idx
intra_pred_mode0_idx
intra_pred_mode1_idx
```

FIG. 14

FIG. 15A

FIG. 15B

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

EP 4 730 791 A1

FIG. 16

16 input coefficients for 4x4 forward LFNST
64 input coefficients for 8x8 forward LFNST

Forward low-frequency
non-separable transform

Forward Primary
Transform

Quantization

bitstream

Inverse Primary
Transform

De-Quantization

Inverse low-frequency
non-separable transform

8 input coefficients for 4x4 inverse LFNST
16 input coefficients for 8x8 inverse LFNST

FIG. 17

FIG. 18

FIG. 19

FIG. 20

CU to parse

(Width ≤ maxTbSize && Height ≤ maxTbSize) ? ⟩⟩— 2110

no

yes

isTrSkip ? ⟩⟩— 2120

yes

no

(IfnstDcOnly is false) or (CU in ISP mode) ? ⟩⟩— 2130

no

yes

hasLuma = singleTree ? True : (chType==LUMA)
hasChroma = singleTree ? True : (chType==CHROMA) — 2140

violatesLfnstConstraint =
(hasLuma && violatesLfnstConstraint[LUMA]) ||
(hasChroma && violatesLfnstConstraint[CHROMA]) — 2150

violatesLfnstConstraint ? ⟩⟩— 2160

yes

no

Infer LFNST index to 0

2170

Parsed LFNST index — 2180

END — 2199

FIG. 21

CU to parse

(Width ≤ maxTbSize *&&* Height ≤ maxTbSize) ?  — no

yes

isTrSkip ?  — yes

no

(lfnstDcOnly is false) or (CU in ISP mode) ?  — no

yes

hasLuma = singleTree ? True : (chType==LUMA)
hasChroma = singleTree ? True : (chType==CHROMA)

violatesLfnstConstraint =
(hasLuma *&&* violatesLfnstConstraint[LUMA]) ||
(hasChroma *&&* violatesLfnstConstraint[CHROMA])          2205

violatesNSPTConstraint =
(hasLuma *&&* violatesNSPTConstraint[LUMA]) ||
(hasChroma *&&* violatesNSPTConstraint[CHROMA])          2210

violatesLfnstConstraint *&&*
violatesNSPTConstraint?          2220          2245
— yes

Infer LFNST index to 0

2230

violatesLfnstConstraint?  — yes → Parse NSPT index
2240

no

violatesNSPTConstraint?  — yes → Parse Lfnst index
2250                                          2255    2280

no

Parsed LFNST/NSPT index          2260

LFNST/NSPT is zero?  — no → Parse LFNST/NSPT flag
2270

yes

END          2299

## FIG. 22

**EUROPEAN SEARCH REPORT**

Application Number

EP 24 30 6716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2025/002817 A1 (INTERDIGITAL CE PATENT HOLDINGS SAS [FR]) 2 January 2025 (2025-01-02) * paragraphs [0138], [0109]; figures 7, 9, 10, 12 * | 1-3,6-8, 13,15 | INV. H04N19/12 H04N19/61 H04N19/70 H04N19/147 H04N19/176 |
| X | US 11 882 284 B2 (FRAUNHOFER GES FORSCHUNG [DE]) 23 January 2024 (2024-01-23) * column 2, line 29; figures 6, 10 * * column 3, lines 28-31, 21-33 * * column 4, lines 15-21 * * column 6, lines 49-51, 60, 49-65, 57-60 * * column 15, line 15 * * column 17, lines 55-58 * * column 20, line 53 * * column 23, lines 62-63 * * column 29, lines 42-49 * * column 51, lines 35-36, 55-64 * * column 52, lines 15-19 * * column 41, lines 29-40 * | 1-15 | |
| A | WO 2024/174828 A1 (MEDIATEK INC [CN]) 29 August 2024 (2024-08-29) * the whole document * | 1-15 | TECHNICAL FIELDS SEARCHED (IPC) H04N |

The present search report has been drawn up for all claims

| Place of search | Date of completion of the search | Examiner |
|---|---|---|
| The Hague | 20 March 2025 | Satti, Shahid |

## ANNEX TO THE EUROPEAN SEARCH REPORT
## ON EUROPEAN PATENT APPLICATION NO.

EP 24 30 6716

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | Publication date |
|---|---|---|---|
| WO 2025002817 A1 | 02-01-2025 | NONE | |
| US 11882284 B2 | 23-01-2024 | CN 112567745 A | 26-03-2021 |
| | | CN 119011831 A | 22-11-2024 |
| | | EP 3777165 A1 | 17-02-2021 |
| | | JP 7613916 B2 | 15-01-2025 |
| | | JP 2021519546 A | 10-08-2021 |
| | | JP 2023062181 A | 02-05-2023 |
| | | KR 20200138804 A | 10-12-2020 |
| | | TW 201946460 A | 01-12-2019 |
| | | TW 202137762 A | 01-10-2021 |
| | | US 2021084301 A1 | 18-03-2021 |
| | | US 2024114138 A1 | 04-04-2024 |
| | | WO 2019185883 A1 | 03-10-2019 |
| WO 2024174828 A1 | 29-08-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARTA KARCZEWICZ et al.** Non-EE2: NSPT kernels for non-regular intra modes. *Document: JVET-AI0255, Joint Video Experts Team (JVET) of ITU-T SG 16 WP 3 and ISO/IEC JTC 1/SC 29*, July 2024